# EUROPÄISCHE PATENTANMELDUNG

(11) **EP 4 502 349 A1**
(43) Veröffentlichungstag der Anmeldung: **05.02.2025**
(21) Anmeldenummer: 24186471.9
(22) Anmeldetag: 04.07.2024
(51) Int. Cl.: F01P 5/04, F01P 7/04, B60K 11/04, B66C 23/70

(54) **ZIVILES KETTENFAHRZEUG**

(30) Priorität: 04.08.2023 DE 102023120728
(71) Anmelder: Kässbohrer Geländefahrzeug AG, 88471 Laupheim (DE)
(72) Erfinder: Pfetsch, Tobias, 89134 Blaustein (DE); Schmied, Markus, 89233 Neu-Ulm (DE); Ströbele, Roman, 89195 Staig (DE)
(74) Vertreter: Patentanwälte Ruff, Wilhelm, Beier, Dauster & Partner mbB

(57) **Zusammenfassung**

2.1. Ein ziviles Kettenfahrzeug mit einem Kühlsystem für Fahrantriebs- und Funktionskomponenten des Kettenfahrzeugs, wobei das Kühlsystem mehrere Kühlflächen verschiedener Kühlkomponenten aufweist, sowie mit einem durch eine Antriebseinheit antreibbaren Lüfterrad, das den Kühlflächen zugeordnet ist, um eine Luftdurchströmung durch die Kühlflächen zu erzeugen, und mit einer Steuereinrichtung zum Ansteuern der Antriebseinheit des Lüfterrads ist bekannt.

2.2. Erfindungsgemäß ist vorgesehen, dass die Antriebseinheit dazu ausgelegt ist, das Lüfterrad in entgegengesetzten Drehrichtungen anzutreiben, wobei in einer Drehrichtung Umgebungsluft ansaugbar und über die Kühlflächen leitbar und in der entgegengesetzten Drehrichtung die Kühlflächen ausblasbar sind.

## Beschreibung

Die Erfindung betrifft ein ziviles Kettenfahrzeug mit einem Kühlsystem für Fahrantriebs- und Funktionskomponenten des Kettenfahrzeugs, wobei das Kühlsystem mehrere Kühlflächen verschiedener Kühlkomponenten aufweist, sowie mit einem durch eine Antriebseinheit antreibbaren Lüfterrad, das den Kühlflächen zugeordnet ist, um eine Luftdurchströmung durch die Kühlflächen zu erzeugen, und mit einer Steuereinrichtung zum Ansteuern der Antriebseinheit des Lüfterrads.

Bei derartigen Kettenfahrzeugen ist bekannt, dass das Lüfterrad eine Luftdurchströmung erzeugt, die über die Kühlflächen geleitet wird und an welche die Kühlflächen Wärme abgeben. Auf diese Weise kühlt der durch das Lüfterrad erzeugte Luftstrom die Kühlflächen. Beim Ansaugen der Umgebungsluft werden in dieser enthaltene Staub- und Schmutzpartikel ebenfalls mit angesaugt und über die Kühlflächen geleitet. Die Staub- und Schmutzpartikel können sich an den Kühlflächen festsetzen. Dies beeinträchtigt u.a. die Wärmeabgabe der Kühlflächen an die Umgebungsluft und senkt damit die Kühlleistung des Kühlsystems. Daher müssen die Kühlflächen wiederkehrend gereinigt werden.

Aufgabe der Erfindung ist es, ein Kettenfahrzeug der eingangs genannten Art zu schaffen, das eine zuverlässige Kühlung der Kühlkomponenten auch über einen langen Zeitraum bereitstellt.

Diese Aufgabe wird dadurch gelöst, dass die Antriebseinheit dazu ausgelegt ist, das Lüfterrad in entgegengesetzten Drehrichtungen anzutreiben, wobei in einer Drehrichtung Umgebungsluft ansaugbar und über die Kühlflächen leitbar und in der entgegengesetzten Drehrichtung die Kühlflächen ausblasbar sind. Beim Ausblasvorgang wird Luft über die Kühlflächen geleitet und in die Umgebung ausgeblasen. Auf diese Weise können an den Kühlflächen anhaftende Staub- und Schmutzpartikel von den Kühlflächen gelöst und in die Umgebungsluft transportiert werden. Hierdurch werden die Kühlflächen beim Ausblasvorgang gereinigt. Dadurch wird ein Aufwand einer separaten oder manuellen Reinigung durch einen Benutzer deutlich reduziert. Bei kalter Au-ßenumgebung kann die Umkehr der Drehrichtung des Lüfterrades auch dazu verwendet werden, die Kühlflächen der Kühlkomponenten abzutauen. Denn wenn die Kühlkomponenten Antriebskomponenten fahrzeugaußenseitig flankieren, dann ist innenseitig im Bereich der Antriebskomponenten aufgrund des Laufens eines Verbrennungsmotors eine höhere Temperatur vorhanden als in der Fahrzeugumgebung. Somit kann die Umkehr der Drehrichtung des Lüfterrades wärmere Luft über die Kühlkomponenten leiten und etwaige Eis- und Schneeanhaftungen auftauen. Die Kühlkomponenten können über einen langen Zeitraum bei gleichbleibendem Wirkungsgrad betrieben werden, ohne durch Verschmutzung oder Eis- oder Schneepartikel zugesetzt zu werden. Das Lüfterrad und die Antriebseinheit bilden gemeinsam eine Lüftungseinheit. Das Ansaugen der Umgebungsluft kann auch als Kühlbetrieb oder als Standby-Betrieb der Lüftungseinheit und das Ausblasen von Luft in die Umgebung als Reinigungsbetrieb der Lüftungseinheit bezeichnet werden. Das Lüfterrad kann - in Luftströmungsrichtung gesehen - vor den Kühlflächen der Kühlkomponenten, hinter den Kühlflächen oder zwischen den Kühlflächen jeweiliger Kühlkomponenten platziert sein.

In Ausgestaltung der Erfindung sind den Kühlkomponenten Sensoren zur Erfassung von Betriebsparametern der Kühlkomponenten zugeordnet und die Steuereinrichtung steuert eine Drehgeschwindigkeit des Lüfterrads abhängig von den erfassten Betriebsparametern. Dadurch ist im Kühlbetrieb der Lüftungseinheit eine optimale Kühlung der Kühlkomponenten sichergestellt. Ein durch einen Sensor erfasster Betriebsparameter einer der Kühlkomponenten kann z.B. eine Temperatur der Kühlkomponente, ein Durchsatz der Kühlkomponente, insbesondere ein Volumenstrom durch die Kühlkomponente, oder ein Betriebszustand der Kühlkomponente sein. Die durch die Steuereinrichtung gesteuerte Drehgeschwindigkeit des Lüfterrads nimmt einen Wert zwischen null, d.h. einem Stillstand des Lüfterrads, und einem maximalen Wert an, wobei sich die jeweiligen maximalen Werte für den Kühlbetrieb und den Reinigungsbetrieb, d.h. in den beiden entgegengesetzten Drehrichtungen des Lüfterrads, voneinander unterscheiden können.

In weiterer Ausgestaltung der Erfindung weist die Steuereinrichtung ein Steuerprogramm auf, das zeitabhängig regelmäßig oder unregelmäßig eine Umkehr der Drehrichtung des Lüfterrads zu einem Ausblasvorgang der Kühlflächen steuert. Das wiederkehrende Ausführen des Ausblasvorgangs führt dazu, dass sich allenfalls geringe Mengen an Staub oder Schmutz an den Kühlflächen ansetzen können und diese wiederkehrend gereinigt werden. Dadurch ist eine gleichbleibende, von Staub oder Schmutz nicht oder kaum beeinträchtigte Kühlung des Kühlsystems gewährleistet. Zudem ermöglicht die automatische Drehrichtungsumkehr des Lüfterrads eine vereinfachte Handhabung des Kettenfahrzeugs, da der Fahrer sich nicht um zugesetzte Kühlflächen kümmern muss. Vorzugsweise wird der Ausblasvorgang in regelmäßigen Zeitintervallen durchgeführt. Zusätzlich oder alternativ wird der Ausblasvorgang zeitunabhängig durchgeführt, sobald eine oder mehrere Bedingungen erfüllt sind. Diese können z.B. von den Betriebsparametern der Kühlkomponenten abhängen.

In weiterer Ausgestaltung der Erfindung ist in einem Fahrerhaus des Kettenfahrzeugs eine mit der Steuereinrichtung wirkverbundene Anzeige- und Bedieneinrichtung vorgesehen, die eine Drehrichtung und/oder eine Drehgeschwindigkeit und/oder zeitliche Abstände für eine Drehrichtungsumkehr des Lüfterrads anzeigt. Hierdurch kann ein Benutzer stets über einen Betriebszustand der Lüftungseinheit bzw. deren Kühl- und Reinigungsbetrieb informiert sein. Vorzugsweise weist die Anzeige- und Bedieneinrichtung einen Bildschirm auf.

In weiterer Ausgestaltung der Erfindung weist die Anzeige- und Bedieneinrichtung wenigstens eine manuell bedienbare Stellkomponente auf, mittels derer eine Umkehr der Drehrichtung und/oder eine Änderung der Drehgeschwindigkeit und/oder eine Änderung zeitlicher Abstände für eine Drehrichtungsumkehr des Lüfterrads durch eine Bedienperson einstellbar ist. Dadurch kann die Bedienperson den Betrieb des Lüfterrads anpassen, z.B. auf einen aktuellen oder zukünftigen Betrieb des Kettenfahrzeugs oder auf Umgebungsbedingungen des Kettenfahrzeugs wie beispielsweise eine Umgebungstemperatur. Insbesondere kann die Bedienperson die Umkehr der Drehrichtung herbeiführen und damit den Reinigungsbetrieb einleiten. Des Weiteren kann die Bedienperson die Drehgeschwindigkeit des Lüfterrads anpassen und dadurch z.B. die Temperaturen der Kühlkomponenten verändern. Zudem kann die Bedienperson durch die Änderung der zeitlichen Abstände für eine Drehrichtungsumkehr des Lüfterrads den automatischen, zyklischen Wechsel zwischen Kühl- und Reinigungsbetrieb anpassen. Vorteilhaft ist die Stellkomponente in Form eines Touchscreens virtuell in die Anzeige- und Bedieneinrichtung integriert. Alternativ hierzu kann die Anzeige- und Bedieneinrichtung Schalter, Taster, Knöpfe, Regler o.dgl. umfassen.

In weiterer Ausgestaltung der Erfindung sind als Kühlkomponenten ein Kühlwasserkühler eines Verbrennungsmotors und/oder ein Hydraulikölkühler für hydraulische Arbeitsfunktionsmodule und/oder ein Ladeluftkühler für den Verbrennungsmotor und/oder ein Kondensator einer Klimaanlage des Fahrerhauses vorgesehen. Der Verbrennungsmotor ist für einen Fahrantrieb und für den Antrieb einer Hydraulikölpumpe vorgesehen. Die hydraulischen Arbeitsfunktionsmodule umfassen insbesondere einen an dem Kettenfahrzeug montierten Hubkran, eine Kippmulde, eine Hubarbeitsbühne, einen Erdbohrer, einen Vertikalbohrturm, einen Teleskopkran, einen Gelenckran, einen Faltkran, einen Hakenliftaufbau, ein Mulchgerät, ein Räumschild oder eine Schneefräse. Die Kühlung der Kühlkomponenten und die Reinigung von deren Kühlflächen gewährleisten einen zuverlässigen Betrieb der Fahrantriebs- und Funktionskomponenten des Kettenfahrzeugs.

In weiterer Ausgestaltung der Erfindung sind die Kühlkomponenten aufrechtstehend an einer Seite eines Aufbaurahmens des Kettenfahrzeugs angeordnet und das Lüfterrad ist auf einer zu einer Fahrzeugmitte nach innen versetzten Seite der Kühlflächen der Kühlkomponenten positioniert. Bei dieser Anordnung saugt das Lüfterrad im Kühlbetrieb Luft aus der Umgebung an und über die Kühlflächen der Kühlkomponenten. Dadurch gelangt die aus der Umgebung angesaugte Luft unmittelbar zu den Kühlflächen, wodurch eine besonders gute Kühlung der Kühlkomponenten bereitgestellt ist. Im Reinigungsbetrieb bläst das Lüfterrad die Luft über die Kühlflächen und an die Umgebung. Hierbei gelangt die über die Kühlflächen geblasene Luft unmittelbar an die Umgebung, wodurch eine besonders gute Reinigung der Kühlflächen bereitgestellt ist.

Alternativ hierzu ist das Lüfterrad auf einer von der Fahrzeugmitte nach außen versetzten Seite der Kühlflächen der Kühlkomponenten oder zwischen den Kühlkomponenten positioniert. Bei dieser Anordnung saugt das Lüfterrad im Kühlbetrieb der Lüftungseinheit Umgebungsluft an und bläst diese dann über die Kühlflächen der Kühlkomponenten. Im Reinigungsbetrieb saugt das Lüfterrad Luft über die Kühlflächen von innen nach außen, löst dabei Staub und Schmutz von den Kühlflächen und bläst die Luft samt Staub und Schmutz in die Umgebung aus.

In weiterer Ausgestaltung der Erfindung ist wenigstens eine Kühlfläche einer Kühlkomponente in Luftströmungsrichtung des Lüfterrads hinter oder vor der wenigstens einen weiteren Kühlfläche einer weiteren Kühlkomponente angeordnet. Diese - in Luftströmungsrichtung gesehen - sandwichartige Schichtanordnung der Kühlflächen mehrerer Kühlkomponenten vergrößert die Anzahl von mittels der Lüftungseinheit kühlbaren und reinigbaren Kühlflächen. Weitere nicht hintereinander angeordnete Kühlflächen von Kühlkomponenten können nebeneinander, d.h. quer zur Luftströmungsrichtung, angeordnet sein.

In weiterer Ausgestaltung der Erfindung sind wenigstens zwei Kühlkomponenten stationär auf dem Aufbaurahmen angeordnet und wenigstens eine weitere Kühlkomponente ist schwenkbeweglich an einer Tür eines Aufbaugehäuses angeordnet, die das Kühlsystem sowie die Fahrantriebs- und Funktionskomponenten umhaust. Dies ermöglicht einen einfachen zentralen Zugang zu den mehreren Kühlkomponenten trotz deren geschichteter Anordnung. Vorzugsweise weist die wenigstens eine weitere, an der Tür des Aufbaugehäuses angeordnete Kühlkomponente ein im Vergleich zu den stationär auf dem Aufbaurahmen angeordneten Kühlkomponenten geringeres Gewicht auf.

In weiterer Ausgestaltung der Erfindung ist die Steuereinrichtung derart ausgelegt, dass in einem Stationärbetrieb des Kettenfahrzeugs eine Drehrichtungsumkehr des Lüfterrads deaktiviert ist. Der Stationärbetrieb kann z.B. ein Arbeitsbetrieb des Kettenfahrzeugs sein, in dem das Kettenfahrzeug nicht zu einer Fortbewegung, sondern lediglich bezüglich bestimmter Arbeitskomponenten wie der Kippbewegung einer Kippmulde, einer Kranfunktion oder ähnlichem betrieben wird. Es ist denkbar, dass im Stationärbetrieb eine angeforderte Kühlleistung vergleichsweise gering ist und dadurch auch die Ansammlung von Staub- und Schmutzpartikeln auf den Kühlflächen der Kühlkomponenten vergleichsweise gering ist. Durch das Deaktivieren der Drehrichtungsumkehr des Lüfterrads kann eine Geräuschentwicklung durch das Lüfterrad reduziert werden, wobei gleichzeitig ein Betrieb von durch die Kühlkomponenten gekühlten Funktionskomponenten des Kettenfahrzeugs nicht oder kaum beeinträchtigt ist. Insbesondere kann während des Stationärbetriebs eine Drehrichtungsumkehr des Lüfterrads durch die Bedienperson einmalig herbeigeführt werden, z.B. über die Stellkomponente der Anzeige- und Bedieneinrichtung.

In weiterer Ausgestaltung der Erfindung ist die Steuereinrichtung derart ausgelegt, dass bei einer Drehrichtungsumkehr des Lüfterrads für einen Ausblasvorgang eine maximale Drehgeschwindigkeit des Lüfterrads erzeugt wird. Dies gewährleistet eine bestmögliche Reinigung der Kühlflächen bei gleichzeitig kurzer Dauer des Ausblasvorgangs. Zudem wird dadurch der Kühlbetrieb der Lüftungseinheit durch den Ausblasvorgang nur kurzzeitig unterbrochen.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung eine Ausführungsform eines erfindungsgemäßen Kettenfahrzeugs mit einem Aufbaugehäuse und einem Kühlsystem;
- Fig. 2: in perspektivischer Darstellung einen Ausschnitt nach Fig. 1 bei entferntem Aufbaugehäuse;
- Fig. 3: in perspektivischer Darstellung eine Detailansicht des Kühlsystems nach Fig. 1;
- Fig. 4: eine Anzeige- und Bedieneinrichtung im Fahrerhaus des Kettenfahrzeugs nach Fig. 1;
- Fig. 5: schematisch ein Steuerprogramm zur Drehrichtungsumkehr des Lüfterrads des Kettenfahrzeugs nach Fig. 1.

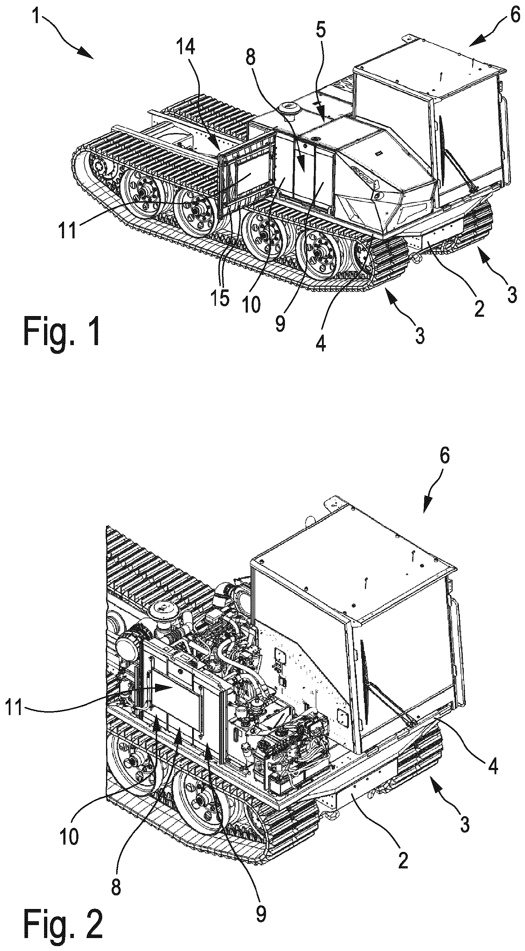

Ein ziviles Kettenfahrzeug 1 nach den Fig. 1 bis 5 weist einen auch als Fahrgestell bezeichneten Tragrahmen 2 auf, an dem auf gegenüberliegenden Seiten jeweils ein Kettenlaufwerk 3 angeordnet ist. Jedes Kettenlaufwerk 3 weist eine umlaufende Kette, vorliegend in Form einer Gummi-Endloskette oder einer Gummi-Kette mit auswechselbaren Querstegen, auf, die über ein heckseitiges Antriebsrad, mehrere große, nicht angetriebene Laufräder sowie ein vorderes, ebenfalls nicht angetriebenes, aber für eine Änderung der Kettenspannung bewegliches Spannrad umläuft. Zum Antrieb der Kettenlaufwerke sind Fahrantriebs- und Funktionskomponenten vorgesehen, die einen zentralen Verbrennungsmotor sowie ein Hydrauliksystem umfassen. Der Verbrennungsmotor ist als Dieselmotor ausgeführt. Das Hydrauliksystem weist zwei hydraulische Antriebsmotoren auf, die den Antriebsrädern der Kettenlaufwerke 3 zugeordnet sind. Der zentrale Verbrennungsmotor ist einschließlich zugehöriger Aggregate, die für den Betrieb des Verbrennungsmotors notwendig sind, auf einem Aufbaurahmen 4 angeordnet und von einem anhand der Fig. 1 gut erkennbaren L-förmigen Aufbaugehäuse 5 umgeben. Dieses Aufbaugehäuse 5 umgibt - in einer Draufsicht gesehen - ein Fahrerhaus 6, das seitlich versetzt zu einer Fahrzeugmitte auf dem Aufbaurahmen 4 angeordnet ist.

An den Tragrahmen 2 können nicht dargestellte Arbeitsfunktionsmodule wie z.B. eine hinter dem Fahrerhaus 6 angeordnete Kippmulde, ein Kran oder eine verstellbare Ladefläche, oder ein frontseitig angebrachter Räumschild vorgesehen sein. Diese können über entsprechende Funktionskomponenten des Kettenfahrzeugs 1 angetrieben werden, insbesondere durch Komponenten des Hydrauliksystems.

Zur Kühlung der Fahrantriebs- und Funktionskomponenten weist das Kettenfahrzeug 1 ein Kühlsystem auf, das mehrere den Fahrantriebs- und Funktionskomponenten zugeordnete Kühlkomponenten umfasst. Das Kühlsystem ist - in Querrichtung des Kettenfahrzeugs 1 gesehen - auf einer dem Fahrerhaus 6 gegenüberliegenden Seite des Aufbaurahmens 4 positioniert. Die Kühlkomponenten umfassen einen Kühlwasserkühler 8 zur Kühlung des Verbrennungsmotors, einen Hydraulikölkühler 9 zur Kühlung von Hydrauliköl, einen Ladeluftkühler 10 zur Kühlung von dem Verbrennungsmotor zugeführter Verbrennungszuluft und einen Kondensator 11 einer Klimaanlage des Fahrerhauses 6, auch als Klimakondensator bezeichnet. Die Kühlkomponenten weisen jeweils Kühlflächen auf, über die sie Wärme abgeben können.

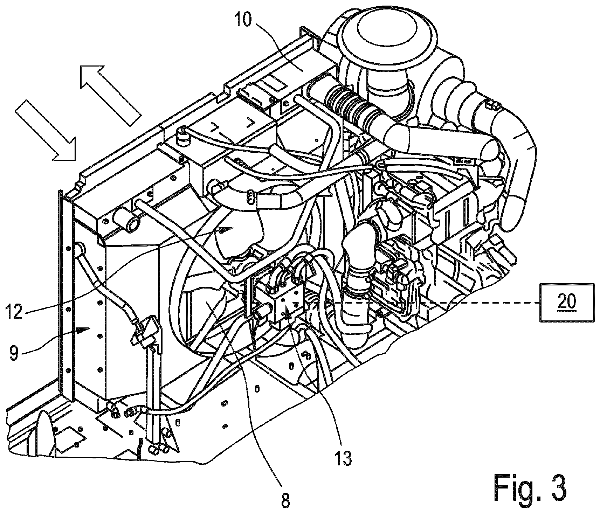

Das Kettenfahrzeug 1 weist eine den Kühlkomponenten zugeordnete Lüftungseinheit auf, die ein Lüfterrad 12 und eine das Lüfterrad 12 zu einer Rotation in einer Drehrichtung antreibende, als Hydraulikmotor ausgeführte Antriebseinheit 13 umfasst. Das Lüfterrad 12 ist auf einer zu einer zur Fahrzeugmitte nach innen versetzten Seite der Kühlflächen der Kühlkomponenten positioniert, wie in Fig. 3 gut zu erkennen ist. Das Lüfterrad 12 erzeugt eine Luftdurchströmung über die Kühlflächen der Kühlkomponenten. Über die Kühlflächen geben die Kühlkomponenten Wärme an die vorbeiströmende Luft ab und werden somit gekühlt.

Wie insbesondere in den Fig. 1 und 2 zu sehen ist, sind der Kühlwasserkühler 8, der Hydraulikölkühler 9 und der Ladeluftkühler 10 - in Längsrichtung des Kettenfahrzeugs 1 gesehen - nebeneinander angeordnet und im Aufbaugehäuse 5 eingehaust. Das Aufbaugehäuse 5 ist im Bereich der Kühlkomponenten mit einer schwenkbaren Tür 14 versehen, an dessen Innenseite der Klimakondensator 11 gehalten ist. Somit ist bei geschlossener Tür 14 der Klimakondensator 11 unmittelbar neben dem Kühlwasserkühler 8, dem Hydraulikölkühler 9 und dem Ladeluftkühler 10 auf deren von der Fahrzeugmitte aus nach außen gerichteter Seite angeordnet. Diese stapelweise Anordnung oder geschichtete Anordnung kann als Sandwichanordnung bezeichnet werden. Der Klimakondensator 11 ist gemeinsam mit der Tür 14 schwenkbar, so dass bei aufgeschwenkter Tür 14 ein Zugang zu allen vier Kühlkomponenten freigegeben ist.

Die Tür 14 weist mehrere Luftschlitze 15 auf, durch welche hindurch Luft in das Aufbaugehäuse 5 hinein und aus dem Aufbaugehäuse 5 heraus strömen kann. Treibt die Antriebseinheit 13 in einem Kühlbetrieb der Lüftungseinheit das Lüfterrad 12 zur Rotation in einer Drehrichtung an, saugt das Lüfterrad 12 Umgebungsluft durch die Luftschlitze 15 an, die über die Kühlflächen des Klimakondensators 11 und dann über die Kühlflächen der nebeneinander quer zur Luftströmungsrichtung angeordneten weiteren Kühlkomponenten 8, 9, 10 strömt.

Das Kettenfahrzeug 1 weist eine Steuereinrichtung 20 auf, die eine Drehgeschwindigkeit des Lüfterrads 12 regelt, indem sie die Antriebseinheit 13 entsprechend ansteuert. Hierzu steht die Steuereinrichtung 20 mit der Antriebseinheit 13 in Wirkverbindung, wie in Fig. 3 durch die gestrichelte Linie dargestellt ist. Der Regelung der Drehgeschwindigkeit liegen die Sensorsignale mehrerer Sensoren zugrunde, die den Kühlkomponenten zugeordnet sind und Betriebsparameter der Kühlkomponenten erfassen. Hierdurch sorgt die Steuereinrichtung 20 für eine ausreichende und situationsangepasste Kühlung der Kühlkomponenten. Die Betriebsparameter umfassen insbesondere die Temperaturen des Kühlwasserkühlers 8, des Hydraulikölkühlers 9 und des Ladeluftkühlers 10 sowie einen Betriebszustand (Ein/Aus-Zustand) des Klimakondensators 11 und einen Luftdurchsatz durch den Klimakondensator 11. Die Steuereinrichtung 20 steuert die Antriebseinheit 13 auf Basis eines Proportionalreglers an, der die erfassten Betriebsparameter als Stellgrö-ßen aufgreift und über eine Lookup-Tabelle in ein entsprechendes Steuersignal für die Antriebseinheit 13 umwandelt.

Die Antriebseinheit 13 ist dafür eingerichtet, das Lüfterrad 12 in einer entgegengesetzten Drehrichtung anzutreiben, in der das Lüfterrad 12 Luft über die Kühlflächen hinweg und durch die Luftschlitze 15 hindurch in die Umgebung ausbläst. Beim Ausblasvorgang löst die ausgeblasene Luft Staub- und Schmutzpartikel von den Kühlflächen, trägt diese aus dem Aufbaugehäuse 5 nach außen in die Umgebung und reinigt auf diese Weise die Kühlflächen von Staub und Schmutz. Die Drehrichtung zum Ansaugen der Umgebungsluft und zum Kühlen der Kühlkomponenten wird auch als Lüfterhauptdrehrichtung und die entgegengesetzte Drehrichtung als Reversierdrehrichtung bezeichnet. Die Luftströmungsrichtungen beim Ansaugen der Umgebungsluft und beim Ausblasen der Luft in die Umgebung sind in Fig. 3 durch zwei entgegengesetzt gerichtete Pfeile veranschaulicht. Beim Ausblasvorgang treibt die Antriebseinheit 13 das Lüfterrad 12 in Reversierdrehrichtung mit maximaler Drehgeschwindigkeit an.

Falls sich an den Kühlflächen oder am Aufbaugehäuse 5 im Bereich der Luftschlitze 15 Schnee oder Eis festgesetzt hat, z.B. infolge eines Betriebs des Kettenfahrzeugs 1 im Winter, kann der Reinigungsbetrieb auch ein Enteisen bzw. Abschmelzen von Schnee und Eis bewirken. Dabei ist hilfreich, dass die ausgeblasene Luft durch Umströmen der Kühlkomponenten eine gegenüber der Umgebungsluft höhere Temperatur aufweist.

Zudem werden im Reinigungsbetrieb der Lüftungseinheit neben den Kühlflächen auch etwaige vorhandene Ansaugsiebe gereinigt. Diese können z.B. in den Luftschlitzen 15 an der Tür 14 angebracht sein und bereits beim Ansaugen von Umgebungsluft im Kühlbetrieb Staub oder Schmutz daran hindern, in das Aufbaugehäuse 5 gesaugt zu werden.

Im Kühlbetrieb steuert die Steuereinrichtung 20 die Antriebseinheit 13 entsprechend der Regelung der Drehgeschwindigkeit in Lüfterhauptdrehrichtung. Im Reinigungsbetrieb bestromt die Steuereinrichtung 20 ein Reversierventil der als Hydraulikmotor ausgeführten Antriebseinheit 13, wodurch die Antriebseinheit 13 das Lüfterrad 12 zur Rotation in umgekehrter Drehrichtung antreibt.

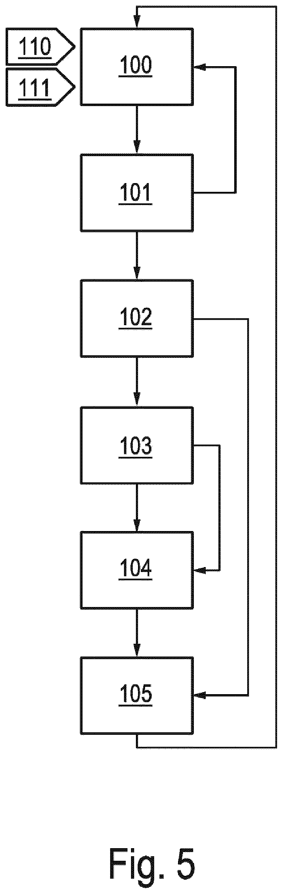

Anhand des in Fig. 5 gezeigten Steuerprogramms wird im Folgenden die Drehrichtungsumkehr des Lüfterrads 12 beschrieben. In Schritt 100 des Steuerprogramms steuert die Steuereinrichtung 20 die Antriebseinheit 13 derart an, dass die Antriebseinheit 13 das Lüfterrad 12 zur Rotation in Lüfterhauptdrehrichtung antreibt. Dabei werden die Kühlkomponenten des Kühlsystems durch die angesaugte Umgebungsluft gekühlt, wobei die Steuereinrichtung 20 eine Drehgeschwindigkeit des Lüfterrads 12 vorgibt, die abhängig von den erfassten Betriebsparametern geregelt ist. Das Reversierventil ist nicht bestromt.

Wird in diesem Zustand eine Umkehr der Drehrichtung des Lüfterrads 12 zur Reinigung der Kühlflächen angefordert, steuert die Steuereinrichtung 20 in Schritt 101 die Antriebseinheit 13 so an, dass die Antriebseinheit 13 die Drehgeschwindigkeit des Lüfterrads 12 bis zum Stillstand verringert.

Sobald das Lüfterrad 12 zum Stillstand kommt, bestromt die Steuereinrichtung 20 in Schritt 102 das Reversierventil der Antriebseinheit 13. In diesem Zustand treibt die Antriebseinheit 13 das Lüfterrad 12 zur Rotation in Reversierdrehrichtung an.

In Schritt 103 steuert die Steuereinrichtung 20 die Antriebseinheit 13 zu einer maximalen Drehgeschwindigkeit des Lüfterrads 12 in Reversierdrehrichtung an.

Nach Ablauf einer vorbestimmten Zeitdauer, z.B. 20 s, steuert die Steuereinrichtung 20 in Schritt 104 die Antriebseinheit 13 zu einem Reduzieren der Drehgeschwindigkeit des Lüfterrads 12 an, bis dieses zum Stillstand kommt.

Im Anschluss beendet die Steuereinrichtung in Schritt 105 die Bestromung des Reversierventils. Die Antriebseinheit 13 treibt das Lüfterrad 12 nun wieder in Lüfterhauptdrehrichtung zu einer Kühlung der Kühlkomponenten an.

Falls im Schritt 101 des Steuerprogramms der Reinigungsbetrieb abgebrochen wird, kehrt das Steuerprogramm wieder zum Schritt 100 zurück, in dem die Steuereinrichtung 20 eine Drehgeschwindigkeit des Lüfterrads 12 betriebsparameterabhängig regelt.

Falls im Schritt 102 der Reinigungsbetrieb abgebrochen wird, springt das Steuerprogramm zum Schritt 105, in dem die Steuereinrichtung 20 die Bestromung des Reversierventils beendet, und gelangt dann weiter zum Schritt 100.

Falls im Schritt 103 der Reinigungsbetrieb abgebrochen wird, gelangt das Steuerprogramm vorzeitig zum Schritt 104, in dem die Steuereinrichtung 20 die Antriebseinheit 13 die Drehgeschwindigkeit des Lüfterrads 12 bis zum Stillstand reduziert.

Ein Reinigungsbetrieb der Steuereinrichtung 20 ist erst möglich, nachdem die durch die Kühlkomponenten gekühlten Fahrantriebs- und Funktionskomponenten des Kettenfahrzeugs 1 eine bestimmte Betriebstemperatur erreicht haben. Ob dies der Fall ist, kann die Steuereinrichtung 20 über die erfassten Betriebsparameter der Kühlkomponenten feststellen.

Die Drehrichtungsumkehr des Lüfterrads 12 und damit der Wechsel des Betriebszustands vom Kühlbetrieb zum Reinigungsbetrieb der Lüftungseinheit kann automatisch -siehe 110- oder manuell -siehe 111- angefordert bzw. eingeleitet werden, wie durch die beiden parallelen Pfeile in Fig. 5 dargestellt wird. Im ersten Fall 110 wird die Drehrichtungsumkehr des Lüfterrads 12 zyklisch und automatisch durchgeführt. Entsprechend einer voreingestellten Zykluszeit bzw. Periodendauer, z.B. 10 min, wechselt die Steuereinrichtung 20 regelmäßig zeitabhängig zwischen einem Antreiben der Antriebseinheit 13 in der Lüfterhauptdrehrichtung und der Reversierdrehrichtung. Durch Einstellen einer größeren bzw. kleineren Zykluszeit, vergrößert bzw. verkleinert sich der Zeitabstand zwischen aufeinanderfolgenden Ausblasvorgängen bzw. Reinigungsphasen.

Beim manuellen Anfordern 111 des Reinigungsbetriebs erfolgt die Umkehr der Drehrichtung des Lüfterrads 12 nach Betätigung einer Stellkomponente durch eine Bedienperson. Das manuelle Anfordern 111 kann z.B. dann erwünscht sein, wenn das Kettenfahrzeug 1 in einem Stationärbetrieb betrieben wird, in dem es sich nicht fortbewegt und demzufolge manche der Fahrantriebs- und Funktionskomponenten im Leerlauf oder gar nicht angetrieben werden. Dadurch kann eine Kühlleistungsanforderung des Kettenfahrzeugs 1 im Stationärbetrieb deutlich geringer sein als in einem Normalbetrieb, in dem die Fahrantriebs- und Funktionskomponenten das Kettenfahrzeug 1 zu einer Fortbewegung antreiben, wodurch auch eine Verschmutzung der Kühlflächen geringer ausfällt. Der azyklische, durch die Bedienperson einzeln angeforderte Reinigungsbetrieb 111 kann ausreichend sein, die Kühlflächen schmutzfrei zu halten, und stellt gleichzeitig eine in Bezug auf eine Lärmbelastung bedienerfreundliche Arbeitsumgebung zur Verfügung.

Die Steuereinrichtung 20 erkennt, ob sich das Kettenfahrzeug 1 im Stationärbetrieb befindet, z.B. durch eine entsprechende Auswertung der Betriebsparameter. Die Steuereinrichtung deaktiviert in diesem Fall selbständig die zyklische, automatische Drehrichtungsumkehr. Ein Reinigungsvorgang kann dann nur noch manuell durch die Bedienperson angefordert werden.

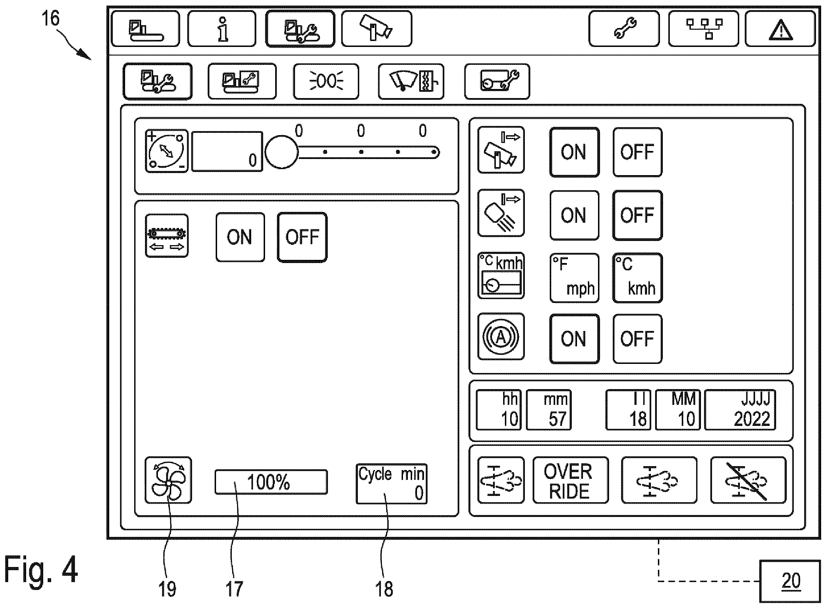

Fig. 4 zeigt eine Anzeige eines Bildschirms einer Anzeige- und Bedieneinrichtung 16, die im Fahrerhaus 6 vorgesehen und mit der Steuereinrichtung 20 wirkverbunden ist, was durch die gestrichelte Linie veranschaulicht ist. Die Anzeige- und Bedieneinrichtung 16 ist als Touchscreen ausgeführt und weist u.a. eine Statusanzeige 17 sowie eine erste Schaltfläche 18 und eine zweite Schaltfläche 19 auf.

Die erste Schaltfläche 18 informiert die Bedienperson über die aktuell eingestellte Zykluszeit. Zudem kann die Bedienperson durch Anklicken der ersten Schaltfläche 18 eine andere Zykluszeit einstellen. Falls sich das Kettenfahrzeug 1 im Stationärbetrieb befindet, zeigt die erste Schaltfläche eine Zykluszeit von 0 min an.

Durch Anklicken der zweiten Schaltfläche 19 kann die Bedienperson im Stationärbetrieb des Kettenfahrzeugs 1 manuell die Drehrichtungsumkehr des Lüfterrads 12 herbeiführen.

Die Statusanzeige 17 zeigt den Zustand der Lüftungseinheit an. Anhand der Statusanzeige 17 kann die Bedienperson erkennen, ob die Lüftungseinheit im Kühlbetrieb oder im Reinigungsbetrieb betrieben wird und wie weit der Reinigungsvorgang fortgeschritten ist unabhängig davon, ob er automatisch oder manuell angefordert worden war.

Im Folgenden sei eine vorteilhafte Verwendung der Statusanzeige 17 beschrieben. Hierbei zeigt die Statusanzeige 17 im Kühlbetrieb bzw. Standby-Betrieb der Lüftungseinheit den Wert 100 %. Sobald die Drehrichtungsumkehr des Lüfterrads 12 angefordert und damit der Reinigungsvorgang gestartet ist, zeigt die Statusanzeige 17 den Wert 0 % an. Die Drehgeschwindigkeit des Lüfterrads 12 wird reduziert, wie zum Schritt 101 beschrieben. Sobald das Lüfterrad 12 entsprechend dem Schritt 102 zum Stillstand kommt, zeigt die Statusanzeige 17 den Wert 20 % an. Dann wird das Reversierventil durch die Steuereinrichtung 20 bestromt und die Antriebseinheit 13 treibt das Lüfterrad 12 in Reversierungsdrehrichtung mit maximaler Drehgeschwindigkeit an, siehe zum Schritt 103. Sobald die hierfür vorbestimmte Zeit abgelaufen ist, zeigt die Statusanzeige 17 den Wert 50 % an. Nach Ablauf dieser Zeitdauer reduziert die Antriebseinheit 13 die Drehgeschwindigkeit des Lüfterrads 12 gemäß dem Schritt 104. Währenddessen zeigt die Statusanzeige 17 den Wert 70 % an. Sobald das Lüfterrad 12 stillsteht, beendet die Steuereinrichtung 20 die Bestromung des Reversierventils und steuert die Antriebseinheit 13 an, sodass die Antriebseinheit 13 das Lüfterrad 12 in Lüfterhauptdrehrichtung beschleunigt. Währenddessen zeigt die Statusanzeige 17 den Wert 90 % an. Sobald der Reinigungsvorgang abgeschlossen ist und die Antriebseinheit 13 das Lüfterrad 12 wieder betriebsparametergeregelt in Lüfterhauptdrehrichtung antreibt, die Lüftungseinheit also im Kühlbetrieb betrieben wird, zeigt die Statusanzeige 17 (wieder) 100 % an.

## Patentansprüche

1. Ziviles Kettenfahrzeug (1) mit einem Kühlsystem für Fahrantriebs- und Funktionskomponenten des Kettenfahrzeugs (1), wobei das Kühlsystem mehrere Kühlflächen verschiedener Kühlkomponenten aufweist, sowie mit einem durch eine Antriebseinheit (13) antreibbaren Lüfterrad (12), das den Kühlflächen zugeordnet ist, um eine Luftdurchströmung durch die Kühlflächen zu erzeugen, und mit einer Steuereinrichtung (20) zum Ansteuern der Antriebseinheit (13) des Lüfterrads (12), **dadurch gekennzeichnet, dass** die Antriebseinheit (13) dazu ausgelegt ist, das Lüfterrad (12) in entgegengesetzten Drehrichtungen anzutreiben, wobei in einer Drehrichtung Umgebungsluft ansaugbar und über die Kühlflächen leitbar und in der entgegengesetzten Drehrichtung die Kühlflächen ausblasbar sind.

2. Ziviles Kettenfahrzeug (1) nach Anspruch 1, **dadurch gekennzeichnet, dass** den Kühlkomponenten Sensoren zur Erfassung von Betriebsparametern der Kühlkomponenten zugeordnet sind, und dass die Steuereinrichtung (20) eine Drehgeschwindigkeit des Lüfterrads (12) steuert abhängig von den erfassten Betriebsparametern.

3. Ziviles Kettenfahrzeug (1) nach Anspruch 1 oder 2, **dadurch gekennzeichnet, dass** die Steuereinrichtung (20) ein Steuerprogramm aufweist, das zeitabhängig regelmäßig oder unregelmäßig eine Umkehr der Drehrichtung des Lüfterrads (12) zu einem Ausblasvorgang der Kühlflächen steuert.

4. Ziviles Kettenfahrzeug (1) nach einem der vorhergehenden Ansprüche, **dadurch gekennzeichnet, dass** in einem Fahrerhaus (6) des Kettenfahrzeugs (1) eine mit der Steuereinrichtung (20) wirkverbundene Anzeige- und Bedieneinrichtung (16) vorgesehen ist, die eine Drehrichtung und/oder eine Drehgeschwindigkeit und/oder zeitliche Abstände für eine Drehrichtungsumkehr des Lüfterrads (12) anzeigt.

5. Ziviles Kettenfahrzeug (1) nach Anspruch 4, **dadurch gekennzeichnet, dass** die Anzeige- und Bedieneinrichtung (16) wenigstens eine manuell bedienbare Stellkomponente aufweist, mittels der eine Umkehr der Drehrichtung und/oder eine Änderung der Drehgeschwindigkeit und/oder eine Änderung zeitlicher Abstände für eine Drehrichtungsumkehr des Lüfterrads (12) durch eine Bedienperson einstellbar ist.

6. Ziviles Kettenfahrzeug (1) nach einem der vorhergehenden Ansprüche, **dadurch gekennzeichnet, dass** als Kühlkomponenten ein Kühlwasserkühler eines Verbrennungsmotors und/oder ein Hydraulikölkühler für hydraulische Arbeitsfunktionsmodule und/oder ein Ladeluftkühler für den Verbrennungsmotor und/oder ein Kondensator einer Klimaanlage des Fahrerhauses vorgesehen sind.

7. Ziviles Kettenfahrzeug (1) nach einem der vorhergehenden Ansprüche, **dadurch gekennzeichnet, dass** die Kühlkomponenten aufrechtstehend an einer Seite eines Aufbaurahmens (4) des Kettenfahrzeugs (1) angeordnet sind, und dass das Lüfterrad (12) auf einer zu einer Fahrzeugmitte nach innen versetzten Seite der Kühlflächen der Kühlkomponenten positioniert ist.

8. Ziviles Kettenfahrzeug (1) nach Anspruch 7, **dadurch gekennzeichnet, dass** wenigstens eine Kühlfläche einer Kühlkomponente in Luftströmungsrichtung des Lüfterrads (12) hinter oder vor der wenigstens einen weiteren Kühlfläche einer weiteren Kühlkomponente angeordnet ist.

9. Ziviles Kettenfahrzeug (1) nach Anspruch 7 oder 8, **dadurch gekennzeichnet, dass** wenigstens zwei Kühlkomponenten stationär auf dem Aufbaurahmen (4) angeordnet sind, und dass wenigstens eine weitere Kühlkomponente schwenkbeweglich an einer Tür (14) eines Aufbaugehäuses (5) angeordnet ist, das das Kühlsystem sowie Fahrantriebs- und Funktionskomponenten umhaust.

10. Ziviles Kettenfahrzeug (1) nach einem der vorhergehenden Ansprüche, **dadurch gekennzeichnet, dass** die Steuereinrichtung (20) derart ausgelegt ist, dass in einem Stationärbetrieb des Kettenfahrzeugs (1) eine Drehrichtungsumkehr des Lüfterrads (12) deaktiviert ist.

11. Ziviles Kettenfahrzeug (1) nach einem der vorhergehenden Ansprüche, **dadurch gekennzeichnet, dass** die Steuereinrichtung (20) derart ausgelegt ist, dass bei einer Drehrichtungsumkehr des Lüfterrads (12) für einen Ausblasvorgang eine maximale Drehgeschwindigkeit des Lüfterrads (12) erzeugt wird.
